# EUROPEAN PATENT APPLICATION

(11) **EP 4 831 904 A1**
(43) Date of publication of application: **28.10.2026**
(21) Application number: 24907261.2
(22) Date of filing: 10.12.2024
(51) Int. Cl.: G06Q 50/26, G06Q 10/06

(54) **VISUALIZATION DEVICE, VISUALIZATION METHOD, AND VISUALIZATION PROGRAM**

(30) Priority: 18.12.2023 JP 2023212948
(71) Applicant: Resonac Corporation, Tokyo 105-7325 (JP)
(72) Inventor: KANESHITA, Takeshi, Tokyo 105-7325 (JP)
(74) Representative: Strehl & Partner mbB
(86) International application number: PCT/JP2024/043708
(87) International publication number: WO 2025/134876

(57) **Abstract**

Initiatives to reduce greenhouse gas emissions throughout an entire supply chain are facilitated. A visualization device includes: an acquisition unit configured to acquire first greenhouse gas emissions resulting from production of a unit amount of an n-th product by an n-th entity among N entities in a supply chain, second greenhouse gas emissions resulting from production of 1st to (n-1)-th products by 1st to (n-1)-th entities, the 1st to (n-1)-th products being used to produce the unit amount of the n-th product, and third greenhouse gas emissions resulting from production of (n+1)-th to N-th products by (n+1)-th to N-th entities, the (n+1)-th to N-th products being produced by using the unit amount of the n-th product; and a visualization unit configured to visualize greenhouse gas emissions of the N entities in the supply chain, using a proportion of the second greenhouse gas emissions relative to the first greenhouse gas emissions and a proportion of the third greenhouse gas emissions relative to the first greenhouse gas emissions.

## Description

### TECHNICAL FIELD

The present disclosure relates to a visualization device, a visualization method, and a visualization program.

### BACKGROUND ART

In the related art, entities that emit greenhouse gases are required to calculate their greenhouse gas emissions, and various calculation methods have been proposed by these entities.

### CITATION LIST

### PATENT LITERATURE

Patent Document 1: Japanese Patent No. 7369984

### SUMMARY OF THE INVENTION

### PROBLEM TO BE SOLVED BY THE INVENTION

However, calculation methods vary among entities and lack compatibility. Furthermore, information is seldom shared between entities. Consequently, it has been difficult to analyze greenhouse gas emissions across an entire supply chain to formulate countermeasures.

The present disclosure facilitates initiatives to reduce greenhouse gas emissions throughout an entire supply chain.

### MEANS FOR SOLVING THE PROBLEM

A first aspect of the present disclosure is a visualization device including:
an acquisition unit configured to acquire
   first greenhouse gas emissions resulting from production of a unit amount of an n-th product by an n-th entity among N entities in a supply chain,
   second greenhouse gas emissions resulting from production of 1st to (n-1)-th products by 1st to (n-1)-th entities, the 1st to (n-1)-th products being used to produce the unit amount of the n-th product, and
   third greenhouse gas emissions resulting from production of (n+1)-th to N-th products by (n+1)-th to N-th entities, the (n+1)-th to N-th products being produced by using the unit amount of the n-th product; and
a visualization unit configured to visualize greenhouse gas emissions of the N entities in the supply chain, using a proportion of the second greenhouse gas emissions relative to the first greenhouse gas emissions and a proportion of the third greenhouse gas emissions relative to the first greenhouse gas emissions.

A second aspect of the present disclosure is the visualization device according to the first aspect, in which
the first greenhouse gas emissions include
greenhouse gas emissions resulting from conduct of business by the n-th entity,
greenhouse gas emissions resulting from supply of energy for the conduct of business by the n-th entity,
greenhouse gas emissions resulting from transportation for the conduct of business by the n-th entity, and
greenhouse gas emissions resulting from activities of business employees for the conduct of business by the n-th entity.

A third aspect of the present disclosure is the visualization device according to the first aspect or the second aspect, in which
the second greenhouse gas emissions include
greenhouse gas emissions resulting from conduct of business by each of the 1st to (n-1)-th entities,
greenhouse gas emissions resulting from supply of energy for the conduct of business by each of the 1st to (n-1)-th entities, and
greenhouse gas emissions resulting from activities of business employees for the conduct of business by each of the 1st to (n-1)-th entities.

A fourth aspect of the present disclosure is the visualization device according to any one of the first to third aspects, in which
the third greenhouse gas emissions include
greenhouse gas emissions resulting from conduct of business by each of the (n+1)-th to N-th entities,
greenhouse gas emissions resulting from supply of energy for the conduct of business by the (n+1)-th to N-th entities, and
greenhouse gas emissions resulting from activities of business employees for the conduct of business by each of the (n+1)-th to N-th entities.

A fifth aspect of the present disclosure is the visualization device according to any one of the first to fourth aspects, in which
the visualization unit is further configured to visualize the greenhouse gas emissions of the N entities in the supply chain with a Sankey diagram, using the proportion of the second greenhouse gas emissions relative to the first greenhouse gas emissions and the proportion of the third greenhouse gas emissions relative to the first greenhouse gas emissions.

A sixth aspect of the present disclosure is the visualization device according to the fifth aspect, in which
the Sankey diagram includes
an emission line connecting entities and having a thickness adjusted based on the proportion of the second greenhouse gas emissions relative to the first greenhouse gas emissions and the proportion of the third greenhouse gas emissions relative to the first greenhouse gas emissions, and
a recovery amount line starting and ending at each one of the entities or connecting the entities, the recovery amount line having a thickness adjusted based on a recovery amount of resources recovered for recycling by each of the entities.

A seventh aspect of the present disclosure is the visualization device according to the sixth aspect further including
a change unit configured to change greenhouse gas emissions of one of the entities, in which
the visualization unit is further configured to change the thickness of the emission line in the Sankey diagram based on the greenhouse gas emissions after being changed by the change unit, the emission line corresponding to the one of the entities.

An eighth aspect of the present disclosure is the visualization device according to the sixth aspect further including
a change unit configured to change renewable energy proportion in energy for conduct of business by one of the entities, in which
the visualization unit is further configured to change the thickness of the emission line in the Sankey diagram based on the greenhouse gas emissions corresponding to the renewable energy proportion after being changed by the change unit, the emission line corresponding to the one of the entities.

A ninth aspect of the present disclosure is the visualization device according to the sixth aspect further including
a change unit configured to change a mode of transportation for conduct of business by one of the entities, in which
the visualization unit is further configured to change the thickness of the emission line in the Sankey diagram based on the greenhouse gas emissions corresponding to the mode of transportation after being changed by the change unit, the emission line corresponding to the one of the entities.

A tenth aspect of the present disclosure is the visualization device according to the sixth aspect further including
a change unit configured to change a recovery amount of resources recovered for recycling for conduct of business by one of the entities, in which
the visualization unit is further configured to
   change the thickness of the recovery amount line in the Sankey diagram based on the recovery amount after being changed by the change unit, the recovery amount line starting and ending at the one of the entities or connecting the entities, and
   change the thickness of the emission line in the Sankey diagram based on the greenhouse gas emissions corresponding to the recovery amount after being changed by the change unit, the emission line corresponding to the one of the entities.

An eleventh aspect of the present disclosure is the visualization device according to the sixth aspect, in which
the n-th entity is one specific entity,
the 1st to (n-1)-th entities include a plurality of entities that produce the 1st to (n-1)-th products of a same kind, and
the (n+1)-th to N-th entities include a plurality of entities that produce the (n+1)-th to N-th products of a same kind.

A twelfth aspect of the present disclosure is a visualization method executed by a computer. The visualization method includes:
acquiring
   first greenhouse gas emissions resulting from production of a unit amount of an n-th product by an n-th entity among N entities in a supply chain,
   second greenhouse gas emissions resulting from production of 1st to (n-1)-th products by 1st to (n-1)-th entities, the 1st to (n-1)-th products being used to produce the unit amount of the n-th product, and
   third greenhouse gas emissions resulting from production of (n+1)-th to N-th products by (n+1)-th to N-th entities, the (n+1)-th to N-th products being produced by using the unit amount of the n-th product; and
visualizing greenhouse gas emissions of the N entities in the supply chain, using the proportion of the second greenhouse gas emissions relative to the first greenhouse gas emissions and the proportion of the third greenhouse gas emissions relative to the first greenhouse gas emissions.

A thirteenth aspect of the present disclosure is a visualization program causing a computer to execute:
acquisition of
   first greenhouse gas emissions resulting from production of a unit amount of an n-th product by an n-th entity among N entities in a supply chain,
   second greenhouse gas emissions resulting from production of 1st to (n-1)-th products by 1st to (n-1)-th entities, the 1st to (n-1)-th products being used to produce the unit amount of the n-th product, and
   third greenhouse gas emissions resulting from production of (n+1)-th to N-th products by (n+1)-th to N-th entities, the (n+1)-th to N-th products being produced by using the unit amount of the n-th product; and
visualization of greenhouse gas emissions of the N entities in the supply chain, using the proportion of the second greenhouse gas emissions relative to the first greenhouse gas emissions and the proportion of the third greenhouse gas emissions relative to the first greenhouse gas emissions.

### ADVANTAGEOUS EFFECTS OF THE INVENTION

According to the present disclosure, it is possible to facilitate initiatives to reduce greenhouse gas emissions throughout an entire supply chain.

### BRIEF DESCRIPTION OF THE DRAWINGS

[FIG. 1] FIG. 1 is a diagram illustrating a calculation example of greenhouse gas emissions of each entity in a supply chain.
[FIG. 2] FIG. 2 is a diagram illustrating a calculation example of greenhouse gas emissions related to a specific product.
[FIG. 3] FIG. 3 is a diagram illustrating an acquisition example of greenhouse gas emissions acquired by a visualization device according to a first embodiment.
[FIG. 4] FIG. 4 is a diagram illustrating an example of a hardware configuration of the visualization device according to the first embodiment.
[FIG. 5] FIG. 5 is a diagram illustrating an example of a functional configuration of the visualization device according to the first embodiment.
[FIG. 6] FIG. 6 is a table illustrating an example of data stored in a data storage unit of the visualization device according to the first embodiment.
[FIG. 7] FIG. 7 is a first diagram illustrating an example of a greenhouse gas emission proportion display screen generated by the visualization device according to the first embodiment.
[FIG. 8] FIG. 8 is an example of a flowchart illustrating a visualization process executed by the visualization device according to the first embodiment.
[FIG. 9] FIG. 9 is a first diagram illustrating an example of a greenhouse gas emission proportion display screen generated by a visualization device according to a second embodiment.
[FIG. 10] FIG. 10 is a second diagram illustrating an example of a greenhouse gas emission proportion display screen generated by the visualization device according to the second embodiment.
[FIG. 11] FIG. 11 is a third diagram illustrating an example of a greenhouse gas emission proportion display screen generated by the visualization device according to the second embodiment.

### DESCRIPTION OF THE EMBODIMENTS

Hereinafter, embodiments will be described with reference to the accompanying drawings. In this specification and the drawings, components having substantially the same functional configuration are denoted by the same reference signs, and repeated description thereof will be omitted.

### [First Embodiment]

### <Calculation Example of Greenhouse Gas Emissions of Each Entity>

First, a calculation example of greenhouse gas emissions visualized by a visualization device according to a first embodiment will be described. The visualization device according to the first embodiment visualizes greenhouse gas emissions of each entity in a supply chain for a specific product.

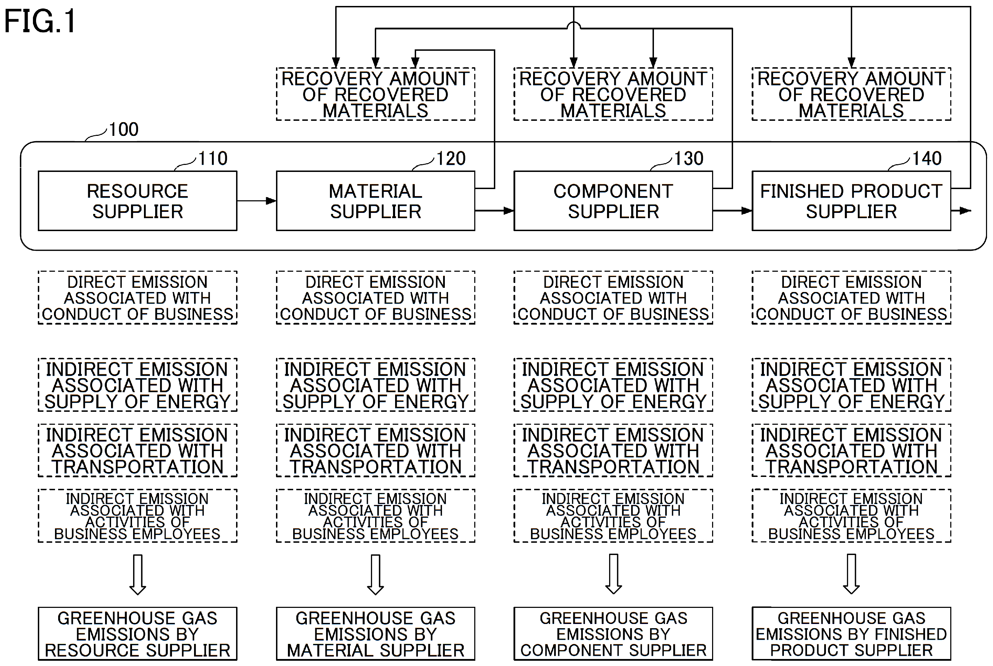

FIG. 1 is a diagram illustrating a calculation example of greenhouse gas emissions of each entity in the supply chain. As illustrated in FIG. 1, a supply chain 100 for a specific product includes entities such as a resource supplier 110, a material supplier 120, a component supplier 130, and a finished product supplier 140.

In the example of FIG. 1, for simplification of description, each of the resource supplier 110, the material supplier 120, the component supplier 130, and the finished product supplier 140 is illustrated as a single entity, but may be a plurality of entities for each type of supplier.

As illustrated in FIG. 1, each entity in the supply chain calculates greenhouse gas emissions for each of the same items and calculates the greenhouse gas emissions of each entity by summing all the items.

Specifically, the resource supplier 110 calculates the greenhouse gas emissions of the resource supplier 110 by summing all of the following calculated items:
greenhouse gas emissions directly resulting from the conduct of business (production of resources);
greenhouse gas emissions indirectly resulting from the supply of energy (electricity) for the conduct of business;
greenhouse gas emissions indirectly resulting from transportation for the conduct of business; and
greenhouse gas emissions indirectly resulting from activities of business employees for the conduct of business.

Among the above items, the greenhouse gas emissions indirectly resulting from the supply of energy for the conduct of business vary depending on the renewable energy proportion in the energy. Further, among the above items, the greenhouse gas emissions indirectly resulting from transportation for the conduct of business vary depending on the mode of transportation.

The material supplier 120 calculates the greenhouse gas emissions of the material supplier 120 by summing all of the following calculated items:
greenhouse gas emissions directly resulting from the conduct of business (production of materials);
greenhouse gas emissions indirectly resulting from the supply of energy (electricity) for the conduct of business;
greenhouse gas emissions indirectly resulting from transportation for the conduct of business; and
greenhouse gas emissions indirectly resulting from activities of business employees for the conduct of business.

Among the above items, the greenhouse gas emissions directly resulting from the conduct of business vary depending on the recovery amount of materials recovered for recycling from the material supplier 120 and each supplier downstream of the material supplier 120 (the component supplier 130 and the finished product supplier 140). Moreover, among the above items, the greenhouse gas emissions indirectly resulting from the supply of energy for the conduct of business vary depending on the renewable energy proportion in the energy. Further, among the above items, the greenhouse gas emissions indirectly resulting from transportation for the conduct of business vary depending on the mode of transportation.

The component supplier 130 calculates the greenhouse gas emissions of the component supplier 130 by summing all of the following calculated items:
greenhouse gas emissions directly resulting from the conduct of business (production of components);
greenhouse gas emissions indirectly resulting from the supply of energy (electricity) for the conduct of business;
greenhouse gas emissions indirectly resulting from transportation for the conduct of business; and
greenhouse gas emissions indirectly resulting from activities of business employees for the conduct of business.

Among the above items, the greenhouse gas emissions directly resulting from the conduct of business vary depending on the recovery amount of components recovered for recycling from the component supplier 130 and the supplier downstream of the component supplier 130 (the finished product supplier 140). Moreover, among the above items, the greenhouse gas emissions indirectly resulting from the supply of energy for the conduct of business vary depending on the renewable energy proportion in the energy. Further, among the above items, the greenhouse gas emissions indirectly resulting from transportation for the conduct of business vary depending on the mode of transportation.

The finished product supplier 140 calculates the greenhouse gas emissions of the finished product supplier 140 by summing all of the following calculated items:
greenhouse gas emissions directly resulting from the conduct of business (production of finished products);
greenhouse gas emissions indirectly resulting from the supply of energy (electricity) for the conduct of business;
greenhouse gas emissions indirectly resulting from transportation for the conduct of business; and
greenhouse gas emissions indirectly resulting from activities of business employees for the conduct of business.

Among the above items, the greenhouse gas emissions directly resulting from the conduct of business vary depending on the recovery amount of finished products recovered for recycling from the finished product supplier 140. Moreover, among the above items, the greenhouse gas emissions indirectly resulting from the supply of energy for the conduct of business vary depending on the renewable energy proportion in the energy. Further, among the above items, the greenhouse gas emissions indirectly resulting from transportation for the conduct of business vary depending on the mode of transportation.

As described above, in the first embodiment, each entity in the supply chain calculates greenhouse gas emissions for each of substantially the same items and calculates the greenhouse gas emissions of each entity by summing all the items.

Therefore, according to the first embodiment, the calculation methods are unified among the entities, making it possible to enhance the compatibility of greenhouse gas emissions data between the entities compared to the related art.

### <Calculation Example of Greenhouse Gas Emissions Related to Specific Product>

Next, a calculation example of greenhouse gas emissions acquired by the visualization device according to the first embodiment will be described. The greenhouse gas emissions acquired by the visualization device according to the first embodiment are greenhouse gas emissions calculated for a specific product, among the greenhouse gas emissions calculated according to the calculation example illustrated in FIG. 1. Specifically, in the first embodiment, greenhouse gas emissions related to "Material A," which is a specific product produced by the material supplier 120, are calculated.

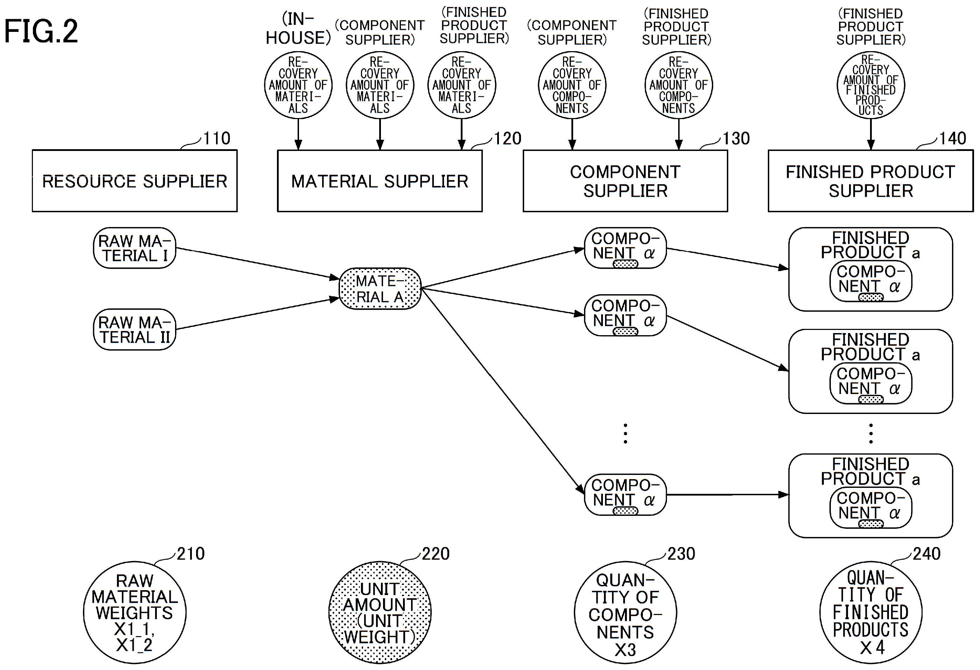

FIG. 2 is a diagram illustrating a calculation example of greenhouse gas emissions related to a specific product. In FIG. 2, "Raw Material I" and "Raw Material II" are raw materials that are produced by the resource supplier 110 and used to produce "Material A," which is a specific product produced by the material supplier 120. In FIG. 2, reference sign 210 represents the raw material weights of "Raw Material I" and "Raw Material II" for the material supplier 120 to produce a unit amount of "Material A" indicated by reference sign 220. The example of reference sign 210 indicates that the raw material weight of "Raw Material I" is "X1_1" and the raw material weight of "Raw Material II" is "X1_2." The resource supplier 110 calculates greenhouse gas emissions associated with the production of "Raw Material I" with the raw material weight "X1_1" and "Raw Material II" with the raw material weight "X1_2."

The material supplier 120 calculates greenhouse gas emissions associated with the production of a unit amount of "Material A."

In FIG. 2, "Component α" is a component produced by the component supplier 130 using "Material A," which is a specific product produced by the material supplier 120. In FIG. 2, reference sign 230 represents the quantity of components produced using a unit amount of "Material A" produced by the material supplier 120. The example of reference sign 230 indicates that the quantity of "Component α" is "X3." The component supplier 130 calculates greenhouse gas emissions associated with the production of "Component α" in quantity "X3."

In FIG. 2, "Finished Product a" is a finished product produced by the finished product supplier 140, in which the components produced using "Material A" (which is a specific product produced by the material supplier 120) are incorporated. In FIG. 2, reference sign 240 represents the quantity of finished products in which the components produced using a unit amount of "Material A" (produced by the material supplier 120) are incorporated. The example of reference sign 240 indicates that the quantity of "Finished Product a" is "X4." The finished product supplier 140 calculates greenhouse gas emissions associated with the production of "Finished Product a" in quantity "X4."

As described above, when the material supplier 120 produces "Material A" in a unit amount indicated by reference sign 220, this production includes:
production based on "Raw Material I" and "Raw Material II"; and
production based on materials recovered in-house, materials recovered from the component supplier 130, or materials recovered from the finished product supplier 140.

Similarly, when the component supplier 130 produces "Component α" in quantity "X3" indicated by reference sign 230, this production includes:
production using "Material A"; and
production using components recovered in-house, or components recovered from the finished product supplier 140.

Similarly, when the finished product supplier 140 produces "Finished Product a" in quantity "X4" indicated by reference sign 240, this production includes:
production using "Component α"; and
production using finished products recovered in-house.

In the example of FIG. 2, although detailed processes for the resource supplier 110 to produce "Raw Material I" and "Raw Material II" are omitted, the resource supplier 110 produces "Raw Material I" and "Raw Material II" through a plurality of processes.

Similarly, in the example of FIG. 2, although detailed processes for the material supplier 120 to produce "Material A" are omitted, the material supplier 120 produces "Material A" through a plurality of processes.

Similarly, in the example of FIG. 2, although detailed processes for the component supplier 130 to produce "Component α" are omitted, the component supplier 130 produces "Component α" through a plurality of processes.

Similarly, in the example of FIG. 2, although detailed processes for the finished product supplier 140 to produce "Finished Product a" are omitted, the finished product supplier 140 produces "Finished Product a" through a plurality of processes.

### <Acquisition Example of Greenhouse Gas Emissions Acquired by Visualization Device>

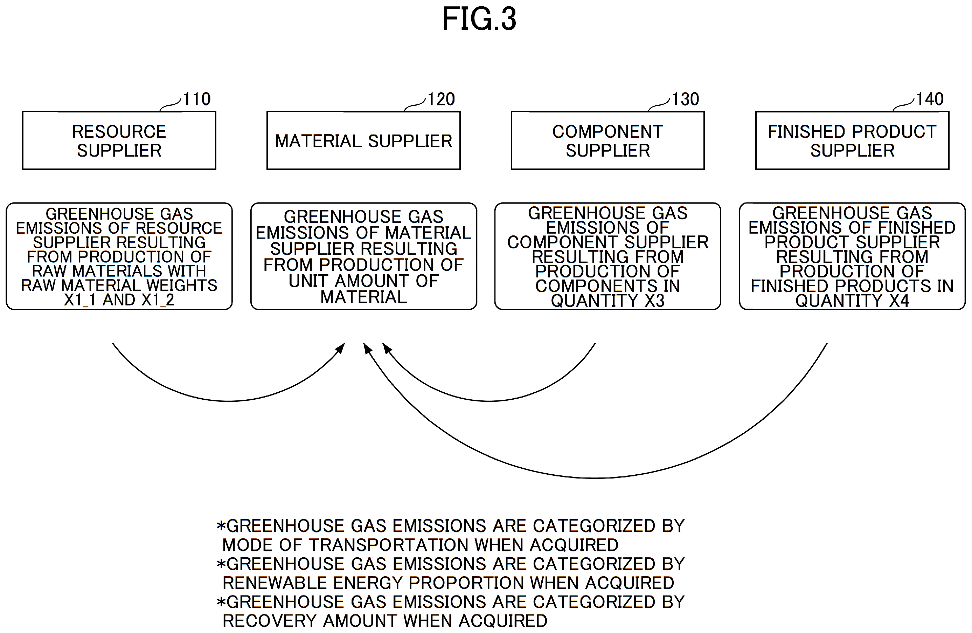

Next, an acquisition example of greenhouse gas emissions acquired by the visualization device according to the first embodiment will be described. The visualization device according to the first embodiment is provided in the material supplier 120 and, as described above, acquires greenhouse gas emissions related to "Material A," which is a specific product produced by the material supplier 120. FIG. 3 is a diagram illustrating an acquisition example of greenhouse gas emissions acquired by the visualization device according to the first embodiment.

As illustrated in FIG. 3, the visualization device provided in the material supplier 120 acquires second greenhouse gas emissions from the resource supplier 110 among the greenhouse gas emissions calculated by the resource supplier 110. An example of the second greenhouse gas emissions is: greenhouse gas emissions resulting from production of "Raw Material I" with the raw material weight "X1_1" and "Raw Material II" with the raw material weight "X1_2."

However, when acquiring the greenhouse gas emissions from the resource supplier 110, the visualization device according to the first embodiment acquires the emissions categorized:
by mode of transportation; and
by renewable energy proportion.

As illustrated in FIG. 3, the visualization device provided in the material supplier 120 acquires first greenhouse gas emissions from the material supplier 120 among the greenhouse gas emissions calculated by the material supplier 120. An example of the first greenhouse gas emissions is: greenhouse gas emissions resulting from production of a unit amount of "Material A."

However, when acquiring the greenhouse gas emissions from the material supplier 120, the visualization device according to the first embodiment acquires the emissions categorized:
by mode of transportation; and
by renewable energy proportion; and
by recovery amount of recovered materials.

Note that the recovery amount of recovered materials refers to the amount of materials that are recovered for recycling and used in production of the unit amount of "Material A."

As illustrated in FIG. 3, the visualization device provided in the material supplier 120 acquires third greenhouse gas emissions from the component supplier 130 among the greenhouse gas emissions calculated by the component supplier 130. An example of the third greenhouse gas emissions is: greenhouse gas emissions resulting from production of "Component α" in quantity "X3."

However, when acquiring the greenhouse gas emissions from the component supplier 130, the visualization device according to the first embodiment acquires the emissions categorized:
by mode of transportation; and
by renewable energy proportion; and
by recovery amount of recovered components.

Note that the recovery amount of recovered components refers to the recovery amount of components that are recovered for recycling and used in production of "Component α" in quantity "X3."

As illustrated in FIG. 3, the visualization device provided in the material supplier 120 acquires third greenhouse gas emissions from the finished product supplier 140 among the greenhouse gas emissions calculated by the finished product supplier 140. Another example of the third greenhouse gas emissions is:
greenhouse gas emissions resulting from production of "Finished Product a" in quantity "X4."

However, when acquiring the greenhouse gas emissions from the finished product supplier 140, the visualization device according to the first embodiment acquires the emissions categorized:
by mode of transportation; and
by renewable energy proportion; and
by recovery amount of recovered finished products.

Note that the recovery amount of recovered finished products refers to the recovery amount of finished products that are recovered for recycling and used in production of "Finished Product a" in quantity "X4."

### <Hardware Configuration of Visualization Device>

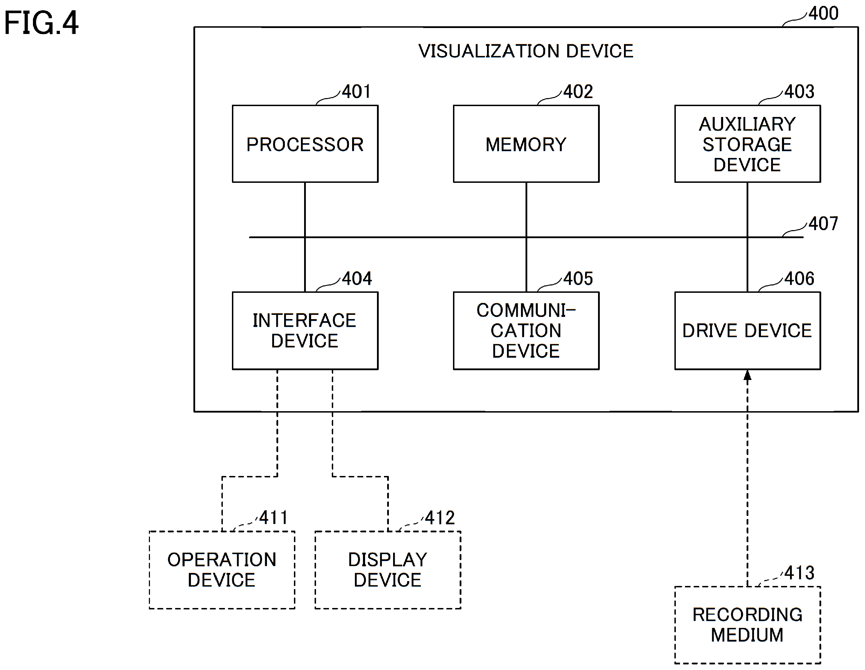

Next, a hardware configuration of the visualization device according to the first embodiment will be described. FIG. 4 is a diagram illustrating an example of a hardware configuration of the visualization device according to the first embodiment. As illustrated in FIG. 4, the visualization device 400 includes a processor 401, a memory 402, an auxiliary storage device 403, an interface device 404, a communication device 405, and a drive device 406. Note that the hardware components of the visualization device 400 are interconnected via a bus 407.

The processor 401 includes various computing devices such as a central processing unit (CPU) and a graphics processing unit (GPU). The processor 401 executes various programs (e.g., a visualization program) by loading the programs into the memory 402.

The memory 402 includes main storage devices such as a read-only memory (ROM) and a random access memory (RAM). The processor 401 and the memory 402 form what is generally referred to as a computer, and the computer implements various functions by the processor 401 executing the programs loaded into the memory 402.

The auxiliary storage device 403 stores various programs and various data used by the processor 401 to execute the programs. For example, a data storage unit 505, which will be described later, is implemented in the auxiliary storage device 403.

The interface device 404 is a connection device for connecting an operation device 411 and a display device 412, which are examples of a user interface device. The communication device 405 is a communication device for communicating with an external device via a network (not illustrated).

The drive device 406 is a device for loading a recording medium 413. The recording medium 413 as used herein includes a medium such as a CD-ROM, a flexible disk, or a magneto-optical disk, which are capable of optically, electrically, or magnetically recording information. The recording medium 413 may include a semiconductor memory such as a ROM or a flash memory, which are capable of electrically recording information.

Note that various programs to be installed in the auxiliary storage device 403 are installed, for example, by loading the distributed recording medium 413 into the drive device 406 and reading the programs recorded on the recording medium 413 with the drive device 406. Alternatively, various programs to be installed in the auxiliary storage device 403 may be installed by being downloaded from a network via the communication device 405.

### <Functional Configuration of Visualization Device>

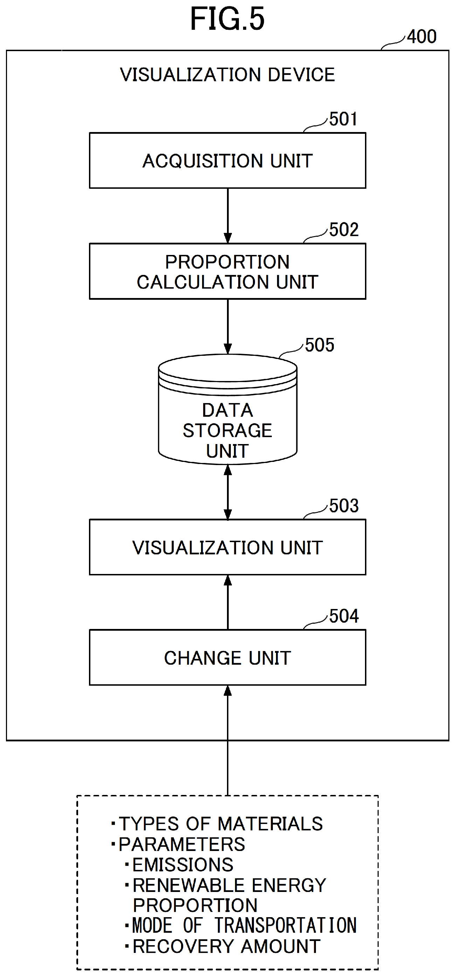

Next, details of a functional configuration of the visualization device 400 will be described. FIG. 5 is a diagram illustrating an example of a functional configuration of the visualization device. As described above, a visualization program is installed in the visualization device 400, and the visualization device 400 functions as an acquisition unit 501, a proportion calculation unit 502, a visualization unit 503, and a change unit 504 by executing the program.

The acquisition unit 501 acquires, from the resource supplier 110, greenhouse gas emissions resulting from production of "Raw Material I" with the raw material weight "X1_1" and "Raw Material II" with the raw material weight "X1_2." The greenhouse gas emissions are categorized by mode of transportation and renewable energy proportion.

The acquisition unit 501 acquires, from the material supplier 120, greenhouse gas emissions resulting from production of a unit amount of "Material A." The greenhouse gas emissions are categorized by mode of transportation, renewable energy proportion, and recovery amount of recovered materials.

The acquisition unit 501 acquires, from the component supplier 130, greenhouse gas emissions resulting from production of "Component α" in quantity "X3." The greenhouse gas emissions are categorized by mode of transportation, renewable energy proportion, and recovery amount of recovered components.

The acquisition unit 501 acquires, from the finished product supplier 140, greenhouse gas emissions resulting from production of "Finished Product a" in quantity "X4." The greenhouse gas emissions are categorized by mode of transportation, renewable energy proportion, and recovery amount of recovered finished products.

In this description, the acquisition unit 501 acquires the greenhouse gas emissions associated with "Material A," which is a specific product produced by the material supplier 120. However, the acquisition unit 501 may acquire greenhouse gas emissions associated with other specific products produced by the material supplier 120.

The proportion calculation unit 502 calculates proportions between the greenhouse gas emissions acquired from the material supplier 120 and the greenhouse gas emissions acquired from each of the resource supplier 110, the component supplier 130, and the finished product supplier 140. Specifically, the proportion calculation unit 502 calculates: 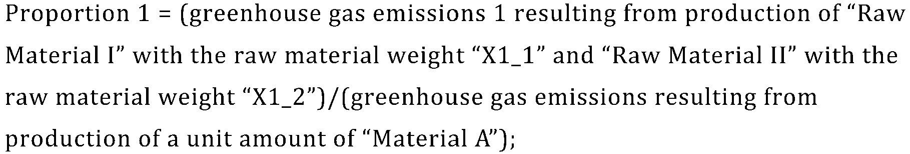 Proportion 1 = (greenhouse gas emissions 1 resulting from production of "Raw Material I" with the raw material weight "X1_1" and "Raw Material II" with the raw material weight "X1_2")/(greenhouse gas emissions resulting from production of a unit amount of "Material A"); 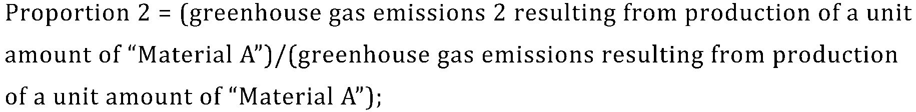 Proportion 2 = (greenhouse gas emissions 2 resulting from production of a unit amount of "Material A")/(greenhouse gas emissions resulting from production of a unit amount of "Material A"); 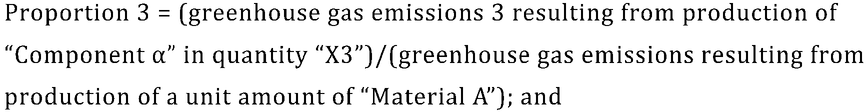 Proportion 3 = (greenhouse gas emissions 3 resulting from production of "Component α" in quantity "X3")/(greenhouse gas emissions resulting from production of a unit amount of "Material A"); and 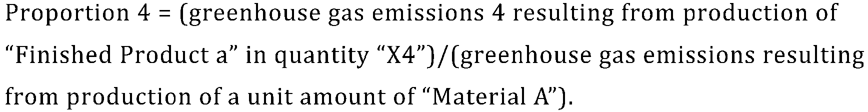 Proportion 4 = (greenhouse gas emissions 4 resulting from production of "Finished Product a" in quantity "X4")/(greenhouse gas emissions resulting from production of a unit amount of "Material A").

The proportion calculation unit 502 stores, in the data storage unit 505, the greenhouse gas emissions used for calculation and the resulting proportions, organized by specific product and further categorized by mode of transportation, renewable energy proportion, and recovery amount.

The visualization unit 503 visualizes the greenhouse gas emissions of the resource supplier 110, the material supplier 120, the component supplier 130, and the finished product supplier 140 included in the supply chain 100 using Proportions 1 to 4 stored in the data storage unit 505.

The visualization unit 503 visualizes the recovery amount of materials recovered by the material supplier 120, the recovery amount of components recovered by the component supplier 130, and the recovery amount of finished products recovered by the finished product supplier 140.

Specifically, the visualization unit 503 visualizes the greenhouse gas emissions of the resource supplier 110, the material supplier 120, the component supplier 130, and the finished product supplier 140 using a Sankey diagram based on Proportions 1 to 4.

For example, the visualization unit 503 visualizes, in the Sankey diagram, an emission line representing greenhouse gas emissions 1, with thickness adjusted relative to other emission lines based on Proportion 1.

The visualization unit 503 visualizes, in the Sankey diagram, an emission line representing greenhouse gas emissions 2, with thickness adjusted relative to other emission lines based on Proportion 2.

The visualization unit 503 visualizes, in the Sankey diagram, an emission line representing greenhouse gas emissions 3, with thickness adjusted relative to other emission lines based on Proportion 3.

The visualization unit 503 visualizes, in the Sankey diagram, an emission line representing greenhouse gas emissions 4, with its thickness adjusted relative to other emission lines based on Proportion 4.

The visualization unit 503 also visualizes the recovery amounts of the material supplier 120, the component supplier 130, and the finished product supplier 140 using a Sankey diagram.

For example, the visualization unit 503 visualizes, in the Sankey diagram, recovery amount lines with thicknesses adjusted according to the recovery amount of materials recovered in-house by the material supplier 120, the recovery amount of materials recovered from the component supplier 130, and the recovery amount of materials recovered from the finished product supplier.

The visualization unit 503 visualizes, in the Sankey diagram, recovery amount lines with thicknesses adjusted according to the recovery amount of components recovered in-house by the component supplier 130 and the recovery amount of components recovered from the finished product supplier 140.

The visualization unit 503 visualizes, in the Sankey diagram, a recovery amount line with a thickness adjusted according to the recovery amount of finished products recovered in-house by the finished product supplier 140.

The change unit 504 receives input of changes for changing the thickness of each line in the Sankey diagram generated by the visualization unit 503, and reflects the changes in the visualization unit 503. The changes for which the change unit 504 receives input include:
types of materials;
greenhouse gas emissions of the resource supplier 110;
greenhouse gas emissions of the material supplier 120;
greenhouse gas emissions of the component supplier 130;
greenhouse gas emissions of the finished product supplier 140; and the like.

The changes for which the change unit 504 receives input also include:
renewable energy proportion of the resource supplier 110;
renewable energy proportion of the material supplier 120;
renewable energy proportion of the component supplier 130;
renewable energy proportion of the finished product supplier 140; and the like.

The changes for which the change unit 504 receives input also include:
mode of transportation of the resource supplier 110;
mode of transportation of the material supplier 120;
mode of transportation of the component supplier 130;
mode of transportation of the finished product supplier 140; and the like.

The changes for which the change unit 504 receives input also include:
recovery amount of materials recovered in-house by the material supplier 120, from the component supplier 130, or from the finished product supplier 140;
recovery amount of components recovered in-house by the component supplier 130 or from the finished product supplier 140;
recovery amount of finished products recovered in-house by the finished product supplier 140; and
the like.

### <Example of Data Stored in Data Storage Unit>

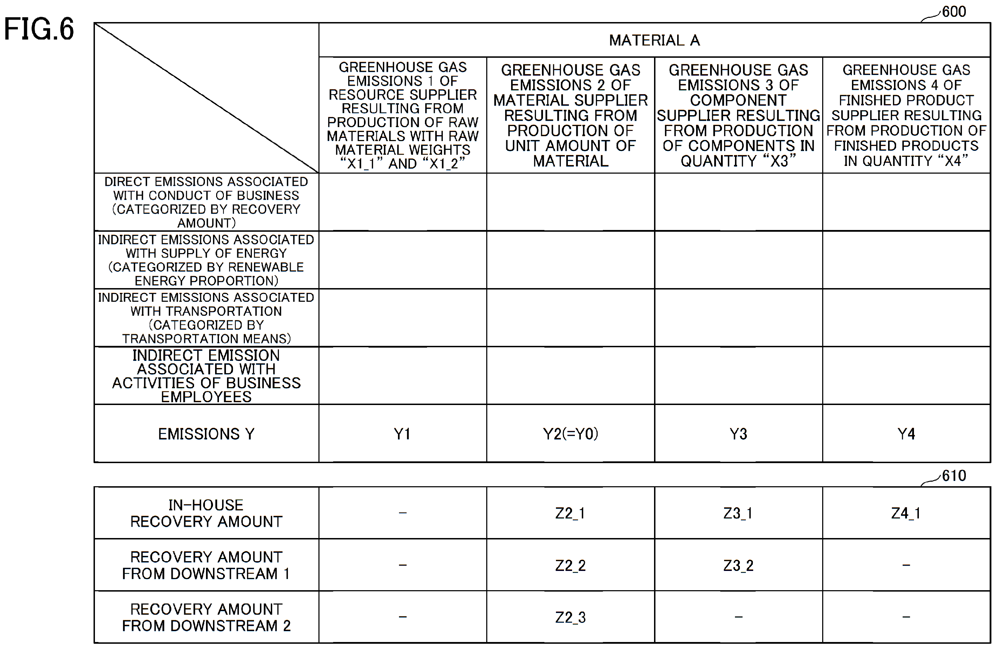

Next, a specific example of the data stored in the data storage unit 505 will be described. FIG. 6 is a table illustrating an example of data stored in a data storage unit of the visualization device according to the first embodiment.

As indicated by reference sign 600 in FIG. 6, in the visualization device 400 according to the first embodiment, the data storage unit 505 stores greenhouse gas emissions of each entity for each type of material.

As indicated by reference sign 600, the greenhouse gas emissions stored in the data storage unit 505 include, as information items:
"greenhouse gas emissions 1 of the resource supplier resulting from production of raw materials with raw material weights "X1_1" and "X1_2";
"greenhouse gas emissions 2 of the material supplier resulting from production of a unit amount of the material";
"greenhouse gas emissions 3 of the component supplier resulting from production of components in quantity "X3"; and
"greenhouse gas emissions 4 of the finished product supplier resulting from production of components in quantity "X4."
The example of reference sign 600 in FIG. 6 illustrates a state in which:
Y1;
Y2 (= Y0);
Y3; and
Y4
are stored as the greenhouse gas emissions corresponding to the information items.

In the example of reference sign 600 in FIG. 6, although omitted for simplification of description, for example, the item "direct emissions associated with the conduct of business" stores different emissions categorized by recovery amount. Moreover, the item "indirect emissions associated with supply of energy" stores different emissions categorized by renewable energy proportion. Furthermore, the item "indirect emissions associated with transportation" stores different emissions categorized by mode of transportation.

Therefore, the "emissions Y" stores the number of greenhouse gas emissions corresponding to the number of combinations between the items.

As indicated by reference sign 610 in FIG. 6, in the visualization device 400 according to the first embodiment, the data storage unit 505 further stores the recovery amount of each entity.

As indicated by reference sign 610 in FIG. 6, the recovery amount stored in the data storage unit 505 includes, as information items:
"in-house recovery amount";
"recovery amount from downstream 1"; and
"recovery amount from downstream 2."
The example of reference sign 610 in FIG. 6 illustrates a state in which:
Z2_1, Z2_2, and Z2_3;
Z3_1 and Z3_2; and
Z4_1
are stored as the recovery amounts corresponding to the information items.

### <Example of Greenhouse Gas Emission Proportion Display Screen>

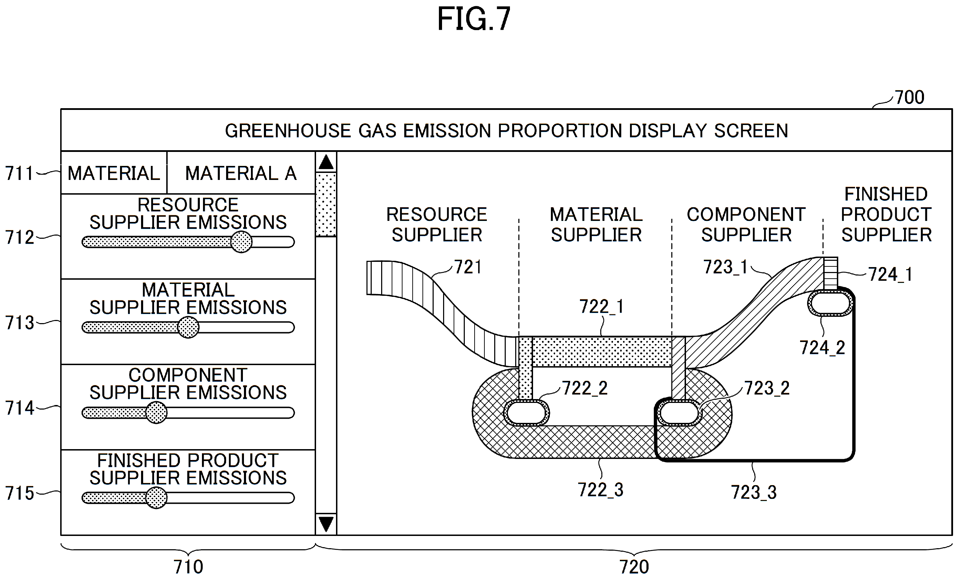

Next, a greenhouse gas emission proportion display screen generated by the visualization unit 503 of the visualization device 400 according to the first embodiment will be described. FIG. 7 is a diagram illustrating an example of a greenhouse gas emission proportion display screen generated by the visualization device according to the first embodiment.

As illustrated in FIG. 7, a greenhouse gas emission proportion display screen 700 includes a change area 710 and a Sankey diagram display area 720.

The change area 710 includes a material type change region 711, a resource supplier greenhouse gas emission change region 712, a material supplier greenhouse gas emission change region 713, a component supplier greenhouse gas emission change region 714, and a finished product supplier greenhouse gas emission change region 715.

A Sankey diagram is displayed in the Sankey diagram display area 720. In the Sankey diagram display area 720, an emission line 721 connecting entities is an emission line with thickness adjusted based on Proportion 1 (= Y1/Y0) and corresponds to the greenhouse gas emissions "Y1" of the resource supplier 110.

In the Sankey diagram display area 720, an emission line 722_1 connecting entities is an emission line with thickness adjusted based on Proportion 2 (= Y2/Y0) and corresponds to the greenhouse gas emissions "Y2" of the material supplier 120. In the Sankey diagram display area 720, a recovery amount line 722_2 starting and ending at one entity is a recovery amount line with thickness adjusted based on an in-house recovery amount. Specifically, the recovery amount line 722_2 starting and ending at one entity represents the in-house recovery amount "Z2_1" of materials for recycling used by the material supplier 120 to produce a unit amount of Material A. In the Sankey diagram display area 720, a recovery amount line 722_3 connecting entities is a recovery amount line with thickness adjusted based on a recovery amount from the component supplier 130. Specifically, the recovery amount line 722_3 connecting entities represents the recovery amount "Z2_2" from the component supplier 130 of materials for recycling used by the material supplier 120 to produce a unit amount of Material A.

In the Sankey diagram display area 720, an emission line 723_1 connecting entities is an emission line with thickness adjusted based on Proportion 3 (= Y3/Y0) and corresponds to the greenhouse gas emissions "Y3" of the component supplier 130. In the Sankey diagram display area 720, a recovery amount line 723_2 starting and ending at one entity is a recovery amount line with thickness adjusted based on an in-house recovery amount. Specifically, the recovery amount line 723_2 starting and ending at one entity represents the in-house recovery amount "Z3_1" of components for recycling used by the component supplier 130 to produce Component α in quantity "X3." In the Sankey diagram display area 720, a recovery amount line 723_3 connecting entities is a recovery amount line with thickness adjusted based on a recovery amount from the finished product supplier 140. Specifically, the recovery amount line 723_3 connecting entities represents the recovery amount "Z3_2" of components from the finished product supplier 140 for recycling. The components are used by the component supplier 130 to produce Component α in quantity "X3."

In the Sankey diagram display area 720, an emission line 724_1 of an end entity is an emission line with thickness adjusted based on Proportion 4 (= Y4/Y0) and corresponds to the greenhouse gas emissions "Y4" of the finished product supplier 140. In the Sankey diagram display area 720, a recovery amount line 724_2 starting and ending at one entity is a recovery amount line with thickness adjusted based on an in-house recovery amount. Specifically, the recovery amount line 724_2 starting and ending at one entity represents the in-house recovery amount "Z4_1" of finished products for recycling used by the finished product supplier 140 to produce "Finished Product a" in quantity "X4."

For example, when a user changes the type of material in the material type change region 711 of the change area 710, a Sankey diagram for the material after being changed is displayed in the Sankey diagram display area 720.

For example, when the user changes the resource supplier greenhouse gas emissions in the resource supplier greenhouse gas emission change region 712 of the change area 710, the thickness of the emission line 721 connecting entities is changed based on the resource supplier greenhouse gas emissions after being changed.

Similarly, when the user changes the material supplier greenhouse gas emissions in the material supplier greenhouse gas emission change region 713 of the change area 710, the thickness of the emission line 722_1 connecting entities is changed based on the material supplier greenhouse gas emissions after being changed.

Similarly, when the user changes the component supplier greenhouse gas emissions in the component supplier greenhouse gas emission change region 714 of the change area 710, the thickness of the emission line 723_1 connecting entities is changed based on the component supplier greenhouse gas emissions after being changed.

Similarly, when the user changes the finished product supplier greenhouse gas emissions in the finished product supplier greenhouse gas emission change region 715 of the change area 710, the thickness of the emission line 724_1 of the end entity is changed based on the finished product supplier greenhouse gas emissions after being changed.

As described above, by visualizing the greenhouse gas emissions of each entity in the supply chain using the Sankey diagram:
the user can analyze the proportion of greenhouse gas emissions of each entity relative to the greenhouse gas emissions of the entire supply chain; and
by being able to analyze the proportion of greenhouse gas emissions of each entity, the user can identify which entity's greenhouse gas emissions are effective for improvement in order to reduce the greenhouse gas emissions of the entire supply chain According to the visualization device 400, it is possible to facilitate initiatives to reduce greenhouse gas emissions throughout the entire supply chain.

### <Flow of Visualization Process>

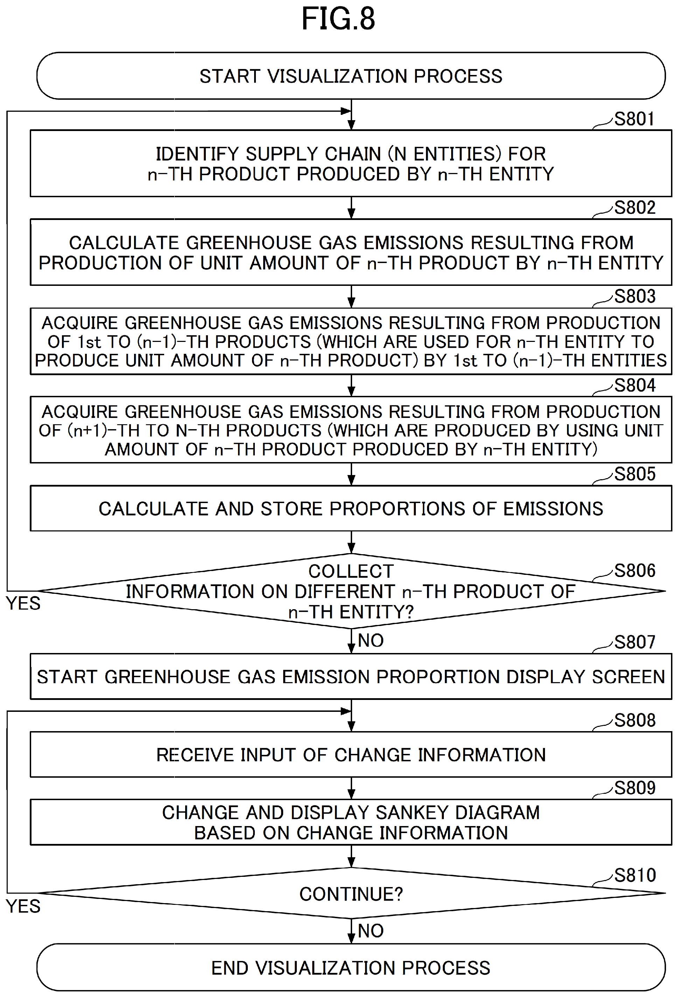

Next, a flow of the visualization process executed by the visualization device according to the first embodiment will be described. Here, the description is generalized for each entity in the supply chain 100. FIG. 8 is an example of a flowchart illustrating a visualization process executed by the visualization device according to the first embodiment. Specifically:
the number of entities in the supply chain is N;
an entity that produces a specific product is an n-th entity; and
products produced by the 1st to N-th entities are referred to as 1st to N-th products. Accordingly, a product produced by an (n-1)-th entity is referred to as an (n-1)-th product, a product produced by an n-th entity as an n-th product,
and a product produced by an (n+1)-th entity as an (n+1)-th product.

In Step S801, the visualization device 400 identifies a supply chain for the n-th product produced by the n-th entity.

In Step S802, the visualization device 400 calculates first greenhouse gas emissions resulting from production of a unit amount of the n-th product by the n-th entity.

In Step S803, the visualization device 400 acquires second greenhouse gas emissions resulting from production of the 1st to (n-1)-th products by the 1st to (n-1)-th entities. The 1st to (n-1)-th products are used for the n-th entity to produce a unit amount of the n-th product.

In Step S804, the visualization device 400 acquires third greenhouse gas emissions resulting from production of the (n+1)-th to N-th products by the (n+1)-th to N-th entities. The (n+1)-th to N-th products are produced by using a unit amount of the n-th product produced by the n-th entity.

In Step S805, the visualization device 400 calculates proportions of the second and third greenhouse gas emissions acquired in Step S803 and Step S804, based on the first greenhouse gas emissions acquired in Step S802. The visualization device 400 stores the calculated proportions in the data storage unit 505 together with the first to third greenhouse gas emissions acquired.

In Step S806, the visualization device 400 determines whether or not to similarly acquire the first to third greenhouse gas emissions for a different type of n-th product of the n-th entity. If it is determined to similarly acquire the first to third greenhouse gas emissions for a different type of n-th product (YES in Step S806), the process returns to Step S801.

If it is determined in Step S806 not to acquire the first to third greenhouse gas emissions for a different type of n-th product (NO in Step S806), the process proceeds to Step S807.

In Step S807, the visualization device 400 receives a startup instruction for the greenhouse gas emission proportion display screen and displays the greenhouse gas emission proportion display screen 700.

In Step S808, the visualization device 400 receives input of change information in the change area 710 of the greenhouse gas emission proportion display screen 700.

In Step S809, the visualization device 400 changes and displays the Sankey diagram based on the received change information and the data stored in the data storage unit 505.

In Step S810, the visualization device 400 determines whether or not to continue displaying the greenhouse gas emission proportion display screen 700. If it is determined to continue the display (YES in Step S810), the process returns to Step S808.

If it is determined in Step S810 not to continue the display (NO in Step S810), the visualization process ends.

### <Summary>

As is clear from the above description, the visualization device 400 according to the first embodiment:
acquires first greenhouse gas emissions "Y0" resulting from production of a unit amount of an n-th product by an n-th entity among N entities in a supply chain;
acquires second greenhouse gas emissions "Y1" resulting from production of 1st to (n-1)-th products by 1st to (n-1)-th entities, in which the 1st to (n-1)-th products are used to produce the unit amount of the n-th product;
acquires third greenhouse gas emissions "Y3" and "Y4" resulting from production of (n+1)-th to N-th products by (n+1)-th to N-th entities, in which the (n+1)-th to N-th products are produced by using the unit amount of the n-th product; and
visualizes greenhouse gas emissions of the N entities in the supply chain, using proportions of the second and third greenhouse gas emissions "Y1," "Y3," and "Y4" relative to the first greenhouse gas emissions "Y0."

By visualizing the greenhouse gas emissions of the N entities in the supply chain in this manner, the visualization device 400 according to the first embodiment can facilitate initiatives to reduce greenhouse gas emissions throughout the entire supply chain.

### [Second Embodiment]

In the first embodiment described above, a user changes the type of material or the greenhouse gas emissions of each entity in the change area 710 of the greenhouse gas emission proportion display screen 700. However, parameters that can be changed by the user in the change area 710 of the greenhouse gas emission proportion display screen 700 are not limited to these. In a second embodiment, a greenhouse gas emission proportion display screen 700 is for changing other parameters.

### (1) Changing Renewable Energy Proportion

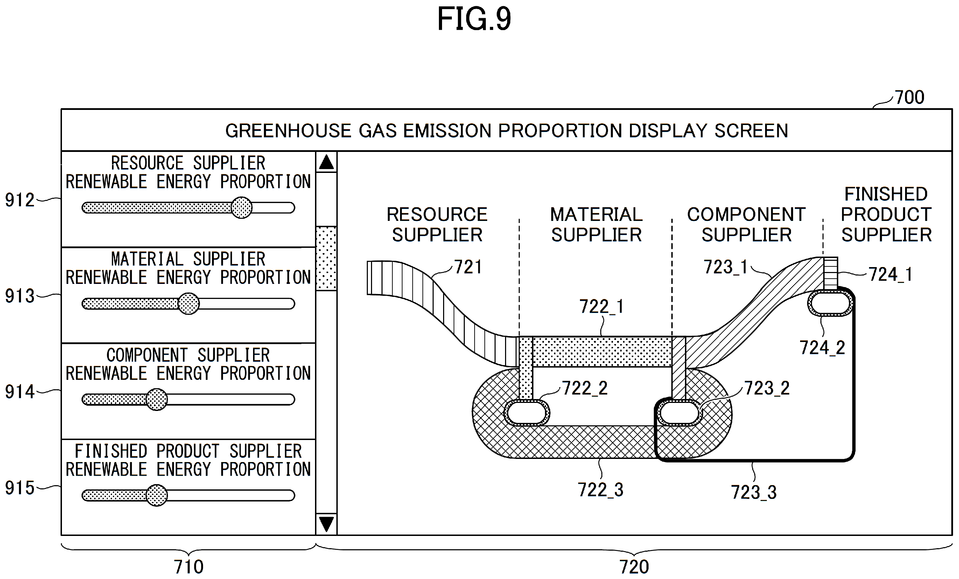

First, changing the renewable energy proportion of each entity by a user will be described. FIG. 9 is a first diagram illustrating an example of a greenhouse gas emission proportion display screen generated by a visualization device according to the second embodiment.

As illustrated in FIG. 9, the change area 710 includes a resource supplier renewable energy proportion change region 912, a material supplier renewable energy proportion change region 913, a component supplier renewable energy proportion change region 914, and a finished product supplier renewable energy proportion change region 915.

For example, when the user changes the renewable energy proportion in the resource supplier renewable energy proportion change region 912 of the change area 710, the thickness of the emission line 721 connecting entities is changed based on the resource supplier greenhouse gas emissions corresponding to the renewable energy proportion after being changed.

Similarly, when the user changes the renewable energy proportion in the material supplier renewable energy proportion change region 913 of the change area 710, the thickness of the emission line 722_1 connecting entities is changed based on the material supplier greenhouse gas emissions corresponding to the renewable energy proportion after being changed.

Similarly, when the user changes the renewable energy proportion in the component supplier renewable energy proportion change region 914 of the change area 710, the thickness of the emission line 723_1 connecting entities is changed based on the component supplier greenhouse gas emissions corresponding to the renewable energy proportion after being changed.

Similarly, when the user changes the renewable energy proportion in the finished product supplier renewable energy proportion change region 915 of the change area 710, the thickness of the emission line 724_1 of the end entity is changed based on the finished product supplier greenhouse gas emissions corresponding to the renewable energy proportion after being changed.

### (2) Changing Mode of Transportation

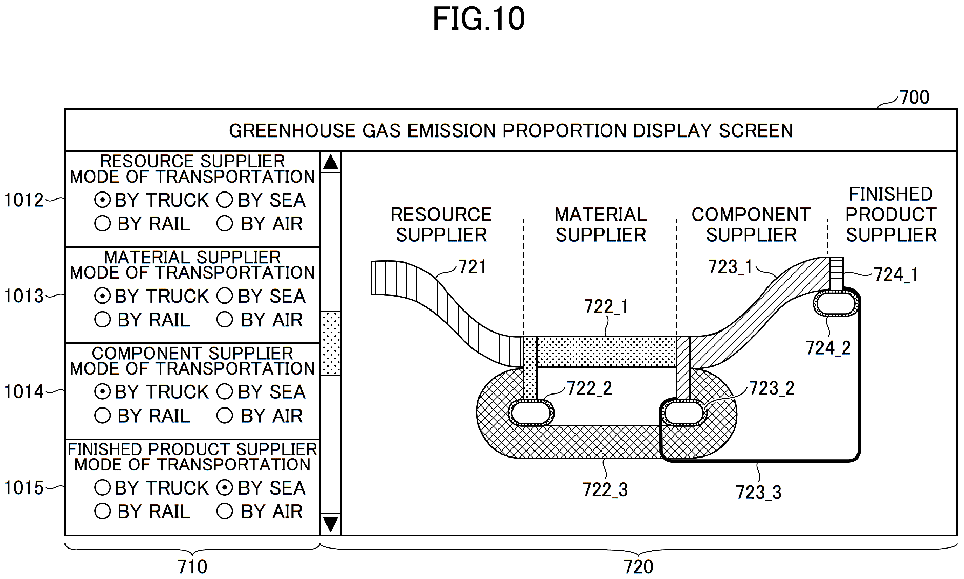

Next, changing the mode of transportation of each entity by a user will be described. FIG. 10 is a second diagram illustrating an example of a greenhouse gas emission proportion display screen generated by the visualization device according to the second embodiment.

As illustrated in FIG. 10, the change area 710 includes a resource supplier transportation change region 1012, a material supplier transportation change region 1013, a component supplier transportation change region 1014, and a finished product supplier transportation change region 1015.

For example, when the user changes the mode of transportation in the resource supplier transportation change region 1012 of the change area 710, the thickness of the emission line 721 connecting entities is changed based on the resource supplier greenhouse gas emissions corresponding to the mode of transportation after being changed.

Similarly, when the user changes the mode of transportation in the material supplier transportation change region 1013 of the change area 710, the thickness of the emission line 722_1 connecting entities is changed based on the material supplier greenhouse gas emissions corresponding to the mode of transportation after being changed.

Similarly, when the user changes the mode of transportation in the component supplier transportation change region 1014 of the change area 710, the thickness of the emission line 723_1 connecting entities is changed based on the component supplier greenhouse gas emissions corresponding to the mode of transportation after being changed.

Similarly, when the user changes the mode of transportation in the finished product supplier transportation change region 1015 of the change area 710, the thickness of the emission line 724_1 of the end entity is changed based on the finished product supplier greenhouse gas emissions corresponding to the mode of transportation after being changed.

### (3) Changing Recovery Amount

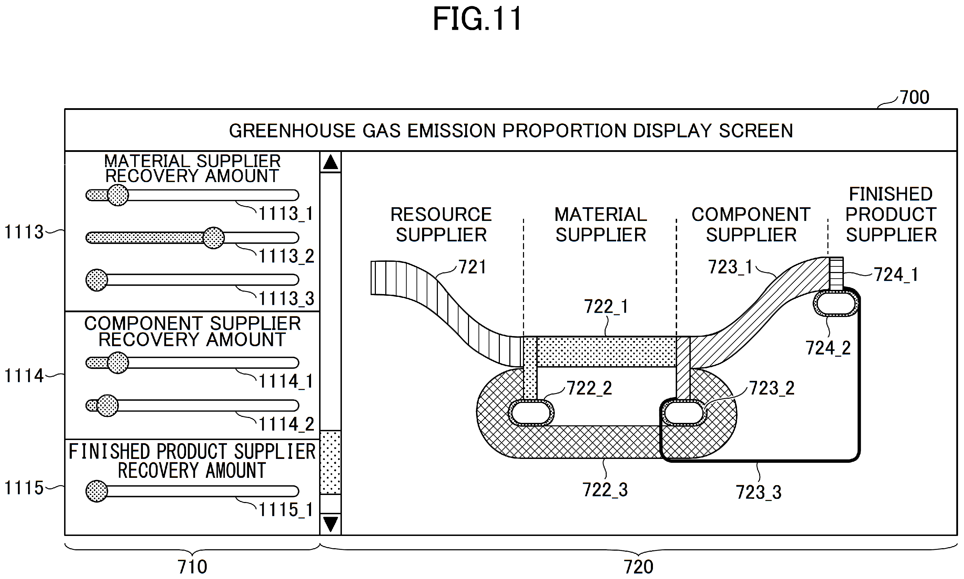

Next, changing the recovery amount of resources for recycling for each entity by a user will be described. FIG. 11 is a third diagram illustrating an example of a greenhouse gas emission proportion display screen generated by the visualization device according to the second embodiment.

As illustrated in FIG. 11, the change area 710 includes a material supplier recovery amount change region 1113, a component supplier recovery amount change region 1114, and a finished product supplier recovery amount change region 1115.

For example, when the user changes a recovery amount 1113_1 in the material supplier recovery amount change region 1113 of the change area 710, the thickness of a recovery amount line 722_2 is changed. In addition, when the recovery amount 1113_1 is changed, the thickness of the emission line 722_1 connecting entities is changed based on the material supplier greenhouse gas emissions corresponding to the recovery amount after being changed.

When the user changes a recovery amount 1113_2, the thickness of a recovery amount line 722_3 is changed, and the thickness of the emission line 722_1 connecting entities is changed based on the material supplier greenhouse gas emissions corresponding to the recovery amount after being changed.

When the user changes a recovery amount 1113_3, a recovery amount line connecting the finished product supplier and the material supplier is newly displayed, and the thickness of the emission line 722_1 connecting entities is changed based on the material supplier greenhouse gas emissions corresponding to the recovery amount after being changed.

Similarly, for example, when the user changes a recovery amount 1114_1 in the component supplier recovery amount change region 1114 of the change area 710, the thickness of a recovery amount line 723_2 is changed. In addition, when the recovery amount 1114_1 is changed, the thickness of the emission line 723_1 connecting entities is changed based on the component supplier greenhouse gas emissions corresponding to the recovery amount after being changed.

When the user changes a recovery amount 1114_2, the thickness of a recovery amount line 723_3 is changed, and the thickness of the emission line 723_1 connecting entities is changed based on the component supplier greenhouse gas emissions corresponding to the recovery amount after being changed.

Similarly, for example, when the user changes a recovery amount 1115_1 in the finished product supplier recovery amount change region 1115 of the change area 710, the thickness of a recovery amount line 724_2 is changed, and the thickness of the emission line 724_1 of the end entity is changed based on the finished product supplier greenhouse gas emissions corresponding to the recovery amount after being changed.

As described above, according to the visualization device 400 of the second embodiment, the user can visually recognize the greenhouse gas emissions after changing other parameters.

### [Third Embodiment]

In the first embodiment, the calculation method for the greenhouse gas emissions of each entity is described using the calculation example in FIG. 1. However, the calculation method for the greenhouse gas emissions of each entity is not limited to the calculation example illustrated in FIG. 1, and the greenhouse gas emissions may be calculated using other calculation methods.

In the greenhouse gas emission proportion display screen 700 of the first embodiment, the Sankey diagram is illustrated for a case where each of the resource supplier 110, the component supplier 130, and the finished product supplier 140 is a single entity. However, the display method of the greenhouse gas emission proportion display screen 700 is not limited to this. For example, when the resource supplier 110 is constituted by two entities, the emission line 721 connecting entities may be divided vertically and displayed according to the proportion of each entity.

In the first embodiment describe above, the specific product is "Material A," and the n-th entity is the material supplier 120. However, the specific product may be Raw Material I, Raw Material II, Component α, Finished Product a, or the like. In this case, the n-th entity is the resource supplier 110, the component supplier 130, or the finished product supplier 140.

In the first embodiment described above, the visualization device 400 acquires, from each entity, the greenhouse gas emissions categorized by mode of transportation, the greenhouse gas emissions categorized by renewable energy proportion, and the greenhouse gas emissions categorized by recovery amount of recovered materials. However, the visualization device 400 does not need to acquire all the greenhouse gas emissions. For example, some of the greenhouse gas emissions may be substituted with industry standard values, estimated values, or the like.

In the second embodiment, parameters other than the type of material and the greenhouse gas emissions of each entity have been exemplified. However, parameters other than the type of material and the greenhouse gas emissions of each entity are not limited to those exemplified in the second embodiment.

In the second embodiment, the user changes to any one mode of transportation when changing the mode of transportation. However, the user may change to a plurality of modes of transportation in predetermined proportions.

In each of the embodiments described above, the greenhouse gas emission proportion display screen 700 has been exemplified as the greenhouse gas emission proportion display screen. However, the layout, display items, and the like of the greenhouse gas emission proportion display screen are not limited to the exemplified greenhouse gas emission proportion display screen 700.

In each of the embodiments described above, the thickness of the emission line corresponding to the greenhouse gas emissions of an entity is changed when a parameter regarding any of the entities is changed in the change area 710 of the greenhouse gas emission proportion display screen 700. However, the change method in the greenhouse gas emission proportion display screen 700 is not limited to this. For example, the thickness of the emission lines corresponding to the greenhouse gas emissions of entities other than the entity whose parameter has been changed is changed so as to maintain the proportions of the greenhouse gas emissions among the respective entities.

In each of the embodiments described above, the greenhouse gas emissions are illustrated using a Sankey diagram. However, the greenhouse gas emissions may be illustrated using a diagram other than the Sankey diagram.

In each of the embodiments described above, the visualization device 400 is implemented by a single device. However, the visualization device 400 may be implemented by a plurality of devices.

Note that the present disclosure is not limited to the configurations described in the above embodiments, and various modifications, such as combinations with other elements, may also be adopted. These aspects may be modified without departing from the spirit of the present invention and may be appropriately defined in accordance with the applied form.

The present application claims priority based on Japanese Patent Application No. 2023-212948 filed on December 18, 2023, the entire contents of which are incorporated herein by reference.

### REFERENCE SIGNS LIST

100: Supply chain
110: Resource supplier
120: Material supplier
130: Component supplier
140: Finished product supplier
400: Visualization device
501: Acquisition unit
502: Proportion calculation unit
503: Visualization unit
504: Change unit
700: Greenhouse gas emission proportion display screen
710: Change area
720: Sankey diagram display area

## Claims

1. A visualization device, comprising:
an acquisition unit configured to acquire
first greenhouse gas emissions resulting from production of a unit amount of an n-th product by an n-th entity among N entities in a supply chain,
second greenhouse gas emissions resulting from production of 1st to (n-1)-th products by 1st to (n-1)-th entities, the 1st to (n-1)-th products being used to produce the unit amount of the n-th product, and
third greenhouse gas emissions resulting from production of (n+1)-th to N-th products by (n+1)-th to N-th entities, the (n+1)-th to N-th products being produced by using the unit amount of the n-th product; and
a visualization unit configured to visualize greenhouse gas emissions of the N entities in the supply chain, using a proportion of the second greenhouse gas emissions relative to the first greenhouse gas emissions and a proportion of the third greenhouse gas emissions relative to the first greenhouse gas emissions.

2. The visualization device according to claim 1, wherein
the first greenhouse gas emissions include
greenhouse gas emissions resulting from conduct of business by the n-th entity,
greenhouse gas emissions resulting from supply of energy for the conduct of business by the n-th entity,
greenhouse gas emissions resulting from transportation for the conduct of business by the n-th entity, and
greenhouse gas emissions resulting from activities of business employees for the conduct of business by the n-th entity.

3. The visualization device according to claim 1 or 2, wherein
the second greenhouse gas emissions include
greenhouse gas emissions resulting from conduct of business by each of the 1st to (n-1)-th entities,
greenhouse gas emissions resulting from supply of energy for the conduct of business by each of the 1st to (n-1)-th entities, and
greenhouse gas emissions resulting from activities of business employees for the conduct of business by each of the 1st to (n-1)-th entities.

4. The visualization device according to any one of claims 1 to 3,
wherein
the third greenhouse gas emissions include
greenhouse gas emissions resulting from conduct of business by each of the (n+1)-th to N-th entities,
greenhouse gas emissions resulting from supply of energy for the conduct of business by the (n+1)-th to N-th entities, and
greenhouse gas emissions resulting from activities of business employees for the conduct of business by each of the (n+1)-th to N-th entities.

5. The visualization device according to any one of claims 1 to 4,
wherein
the visualization unit is further configured to visualize the greenhouse gas emissions of the N entities in the supply chain with a Sankey diagram, using the proportion of the second greenhouse gas emissions relative to the first greenhouse gas emissions and the proportion of the third greenhouse gas emissions relative to the first greenhouse gas emissions.

6. The visualization device according to claim 5, wherein
the Sankey diagram includes
an emission line connecting entities or of an end entity, the emission line having a thickness adjusted based on the proportion of the second greenhouse gas emissions relative to the first greenhouse gas emissions and the proportion of the third greenhouse gas emissions relative to the first greenhouse gas emissions, and
a recovery amount line starting and ending at each one of the entities or connecting the entities, the recovery amount line having a thickness adjusted based on a recovery amount of resources recovered for recycling by each of the entities.

7. The visualization device according to claim 6, further comprising
a change unit configured to change greenhouse gas emissions of one of the entities, wherein
the visualization unit is further configured to change the thickness of the emission line in the Sankey diagram based on the greenhouse gas emissions after being changed by the change unit, the emission line corresponding to the one of the entities.

8. The visualization device according to claim 6, further comprising
a change unit configured to change renewable energy proportion in energy for conduct of business by one of the entities, wherein
the visualization unit is further configured to change the thickness of the emission line in the Sankey diagram based on the greenhouse gas emissions corresponding to the renewable energy proportion after being changed by the change unit, the emission line corresponding to the one of the entities.

9. The visualization device according to claim 6, further comprising
a change unit configured to change a mode of transportation for conduct of business by one of the entities, wherein
the visualization unit is further configured to change the thickness of the emission line in the Sankey diagram based on the greenhouse gas emissions corresponding to the mode of transportation after being changed by the change unit, the emission line corresponding to the one of the entities.

10. The visualization device according to claim 6, further comprising
a change unit configured to change a recovery amount of resources recovered for recycling for conduct of business by one of the entities, wherein
the visualization unit is further configured to
change the thickness of the recovery amount line in the Sankey diagram based on the recovery amount after being changed by the change unit, the recovery amount line starting and ending at the one of the entities or connecting the entities, and
change the thickness of the emission line in the Sankey diagram based on the greenhouse gas emissions corresponding to the recovery amount after being changed by the change unit, the emission line corresponding to the one of the entities.

11. The visualization device according to claim 6, wherein
the n-th entity is one specific entity,
the 1st to (n-1)-th entities include a plurality of entities that produce the 1st to (n-1)-th products of a same kind, and
the (n+1)-th to N-th entities include a plurality of entities that produce the (n+1)-th to N-th products of a same kind.

12. A visualization method executed by a computer, the visualization method comprising:
acquiring
first greenhouse gas emissions resulting from production of a unit amount of an n-th product by an n-th entity among N entities in a supply chain,
second greenhouse gas emissions resulting from production of 1st to (n-1)-th products by 1st to (n-1)-th entities, the 1st to (n-1)-th products being used to produce the unit amount of the n-th product, and
third greenhouse gas emissions resulting from production of (n+1)-th to N-th products by (n+1)-th to N-th entities, the (n+1)-th to N-th products being produced by using the unit amount of the n-th product; and
visualizing the greenhouse gas emissions of the N entities in the supply chain, using the proportion of the second greenhouse gas emissions relative to the first greenhouse gas emissions and the proportion of the third greenhouse gas emissions relative to the first greenhouse gas emissions.

13. A visualization program causing a computer to execute:
acquisition of
first greenhouse gas emissions resulting from production of a unit amount of an n-th product by an n-th entity among N entities in a supply chain,
second greenhouse gas emissions resulting from production of 1st to (n-1)-th products by 1st to (n-1)-th entities, the 1st to (n-1)-th products being used to produce the unit amount of the n-th product, and
third greenhouse gas emissions resulting from production of (n+1)-th to N-th products by (n+1)-th to N-th entities, the (n+1)-th to N-th products being produced by using the unit amount of the n-th product; and
visualization of the greenhouse gas emissions of the N entities in the supply chain, using the proportion of the second greenhouse gas emissions relative to the first greenhouse gas emissions and the proportion of the third greenhouse gas emissions relative to the first greenhouse gas emissions.
